# FASCICULE DE BREVET EUROPEEN

(11) **EP 4 114 724 B1**
(45) Date de publication et mention de la délivrance du brevet: **20.03.2024**
(21) Numéro de dépôt: 21723883.1
(22) Date de dépôt: 08.04.2021
(51) Int. Cl.: B64C 25/26, B64C 25/14

(54) **AGENCEMENT DE BLOCAGE D'UN AXE D'ATTERRISSEUR D'AÉRONEF**
ANORDNUNG ZUM VERRIEGELN EINES FLUGZEUGFAHRWERKS
ARRANGEMENT FOR LOCKING AN AIRCRAFT LANDING GEAR

(30) Priorité: 20.04.2020 FR 2003926
(43) Date de publication de la demande: 11.01.2023
(73) Titulaire: Safran Landing Systems, 78140 Vélizy-Villacoublay (FR)
(72) Inventeur: FERNANDES, Philippe Domingos, 77550 MOISSY-CRAMAYEL (FR); FARCY, Marc, 77550 MOISSY-CRAMAYEL (FR); LUDGER, Nicolas, 77550 MOISSY-CRAMAYEL (FR)
(74) Mandataire: Brevalex
(86) Numéro de dépôt international: PCT/FR2021/050617
(87) Numéro de publication internationale: WO 2021/214396

(56) Documents cités:
- FR-A1- 2 801 865
- GB-A- 1 333 200
- US-A- 3 514 057
- US-A1- 2020 094 950

## Description

### DOMAINE TECHNIQUE

L'invention concerne la sécurisation du fonctionnement d'un atterrisseur d'aéronef en cas de rupture d'un des axes d'articulation de déploiement de cet atterrisseur.

### ÉTAT DE LA TECHNIQUE ANTÉRIEURE

Un atterrisseur d'aéronef comporte une jambe incluant un caisson dans lequel coulisse de façon amortie une portion inférieure portant un train de roues. Le caisson est articulé par son extrémité supérieure à un élément de structure pour permettre à l'ensemble de pivoter autour d'un axe principal pour son déploiement et sa rétractation. Des exemples de l'art antérieur sont fournis par les documents FR2801865, US2020094950, US3514057 et GB1333200.

Complémentairement, un système de verrouillage est prévu pour bloquer l'ensemble en position déployée.

Ce système de verrouillage comporte une contrefiche principale incluant un panneau et une bielle articulés entre eux, le panneau étant articulé sur la structure et la bielle étant articulée sur une partie inférieure du caisson, ainsi qu'une contrefiche secondaire pour maintenir le panneau et la bielle alignés en configuration de verrouillage.

La contrefiche secondaire comporte deux bras articulés entre eux, le premier étant par ailleurs articulé sur l'articulation reliant le panneau à la bielle, le deuxième étant par ailleurs articulé à une partie supérieure du caisson.

L'ensemble est déplacé de son état rétracté à son état déployé par un vérin ayant une extrémité liée à un élément de structure et son autre extrémité liée à une partie supérieure du caisson par l'intermédiaire d'une extrémité d'un axe dit de relevage dont la partie centrale porte également le second bras de la contrefiche secondaire. Cet axe de relevage est porté par une chape rigidement solidaire du caisson.

Le déploiement de l'atterrisseur consiste à commander le vérin pour qu'il se déploie, ce qui a pour effet de faire pivoter le caisson avec l'ensemble de l'atterrisseur, du fait du décalage existant entre l'axe de relevage et l'axe principal de rotation du caisson.

Le panneau et la bielle de la contrefiche principale, partant d'un état plié se déploient alors jusqu'à s'étendre l'un dans le prolongement de l'autre. De même, les bras de la contrefiche secondaire se déploient aussi jusqu'à s'étendre l'un dans le prolongement l'un de l'autre de façon à occuper leur position de verrouillage.

En cas de rupture de l'extrémité de l'axe de relevage portant le vérin, cet axe de relevage est susceptible de se déplacer et de sortir de la chape qui le porte, de sorte qu'il ne maintient alors plus le bras de la contrefiche secondaire. L'atterisseur n'est alors plus verrouillé en position déployée, ce qui ne permet pas d'atterrir.

L'invention a pour objet d'apporter une solution permettant de remédier à cet inconvénient.

### EXPOSÉ DE L'INVENTION

A cet effet, l'invention a pour objet un atterrisseur d'aéronef comprenant un caisson articulé à un élément de structure de l'aéronef pour pivoter entre un état déployé et un état rétracté, cet atterrisseur comprenant :
- un vérin pour rétracter et déployer l'atterrisseur, ce vérin ayant une tête de manoeuvre reliée à une première extrémité d'un axe de relevage porté par deux oreilles d'une chappe du caisson, cette première extrémité étant située hors de la chappe ;
- un système de verrouillage comprenant une contrefiche incluant un bras articulé à une partie supérieure du caisson par l'intermédiaire de l'axe de relevage, ce bras étant terminé par une tête située entre les oreilles de la chappe et traversée par l'axe de relevage ;
- une première butée d'extrémité portée par l'axe de relevage à sa première extrémité, et une deuxième butée d'extrémité située à la deuxième extrémité de l'axe de relevage ;
caractérisé en ce qu'il comporte un système pour bloquer en translation l'axe de relevage en cas de rupture de cet axe de relevage entre sa première extrémité et la chappe.

L'invention permet ainsi d'assurer le verrouillage de l'atterrisseur déployé malgré une rupture de l'axe de relevage au niveau de l'extrémité par laquelle il est lié au vérin de manoeuvre. Autrement dit, la perte de la fonction de relevage n'induit pas de perte du verrouillage de l'atterrisseur, en cas de rupture de l'axe de relevage.

L'invention concerne également un atterrisseur ainsi défini, dans lequel la deuxième butée comporte un épaulement formé à la deuxième extrémité de l'axe de relevage, et dans lequel le système de blocage comporte un organe de blocage situé axialement en vis-à-vis de l'épaulement et rigidement solidaire de la chappe.

L'invention concerne également un atterrisseur ainsi défini, dans lequel l'organe de blocage est rigidement solidarisé à la chappe en étant fixé à une bague portée par une oreille et formant palier de l'axe de relevage, cette bague étant rigidement solidarisée à l'oreille qui la porte.

L'invention concerne également un atterrisseur ainsi défini, dans lequel la bague est rigidement solidarisée à l'alésage de l'oreille par frettage.

L'invention concerne également un atterrisseur ainsi défini, dans lequel l'organe de blocage est une barette ayant une longueur supérieure au diamètre de l'épaulement.

L'invention concerne également un atterrisseur ainsi défini, dans lequel la bague comporte deux pattes dépassant radialement au delà de l'épaulement, et deux boulons traversant chacun une extrémité de la barette et une patte radiale.

L'invention concerne également un atterrisseur ainsi défini, dans lequel le système de blocage comporte une vis s'étendant radialement et traversant conjointement la tête du bras et l'axe de relevage.

L'invention concerne également un atterrisseur ainsi défini, dans lequel la vis traverse la tête et l'axe de relevage de part en part, et est maintenue par un écrou vissé à son extrémité.

### BRÈVE DESCRIPTION DES DESSINS

Figure 1 est une vue d'ensemble en perspective montrant d'un atterrisseur;
Figure 2 est une vue en perspective d'une portion supérieure d'atterrisseur ;
Figure 3 est une vue en perspective d'une liaison par un axe de relevage d'un caisson d'atterrisseur avec son vérin de manoeuvre et avec un bras de contrefiche ;
Figure 4 est une vue en perspective d'une liaison par un axe de relevage d'un caisson d'atterrisseur avec son vérin de manoeuvre et avec un bras de contrefiche et équipé d'un système de blocage selon l'invention ;
Figure 5 est une vue en coupe de l'invention appliquée à un atterrisseur ;
Figure 6 est une vue en perspective d'une liaison par un axe de relevage d'un caisson d'atterrisseur avec son vérin de manoeuvre et avec un bras de contrefiche et équipé d'un boulon de blocage conformément à une variante de l'invention ;
Figure 7 est une vue en coupe de la variante de l'invention appliquée à un atterrisseur.

### EXPOSÉ DÉTAILLÉ DE L'INVENTION

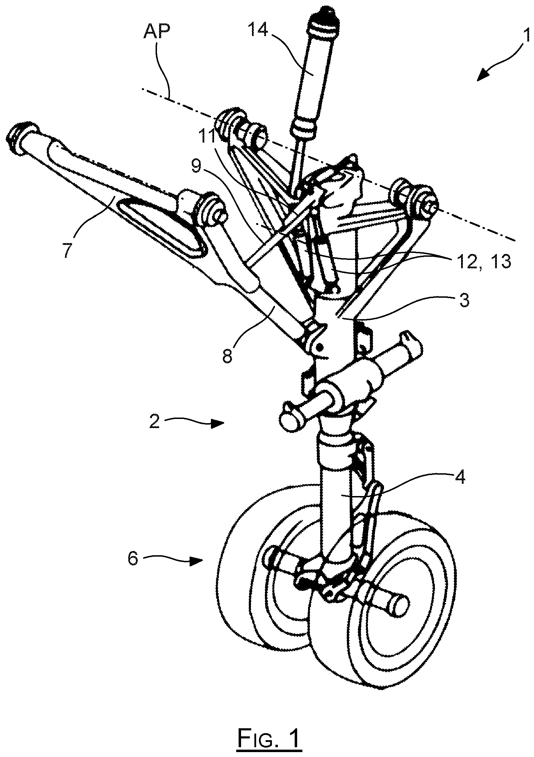

Comme représenté en figure 1, un atterrisseur 1 comporte typiquement une jambe 2 comprenant un caisson 3 dans lequel coulisse de façon amortie une portion inférieure 4 portant un train de roues 6.

Le caisson 3 est articulé par son extrémité supérieure à un élément de structure de l'aéronef pour permettre à l'ensemble de l'atterrisseur de pivoter autour d'un axe de rotation principal AP s'étendant transversalement, afin de permettre son déploiement et sa rétractation. Complémentairement, un système de verrouillage est prévu pour bloquer l'ensemble en position déployée, comme c'est le cas dans la figure 1.

Ce système de verrouillage comporte une contrefiche principale incluant un panneau 7 et une bielle 8 articulés entre eux, le panneau 7 étant articulé sur la structure de l'appareil et la bielle 8 étant articulée sur une partie inférieure du caisson, et une contrefiche secondaire pour maintenir le panneau 7 et la bielle 8 alignées l'une avec l'autre.

La contrefiche secondaire comporte deux bras 9 et 11 articulés entre eux, le bras 9 étant articulé sur l'articulation reliant le panneau 7 à la bielle 8, le bras 11 étant articulé à une partie supérieure du caisson 3. Une paire de ressorts 12 et 13 maintient les bras 9 et 11 dans le prolongement l'un de l'autre pour bloquer l'ensemble à l'état déployé comme sur la figure 1.

L'ensemble est déplacé de son état rétracté à son état déployé par un vérin 14 comprenant un corps 16 dans lequel coulisse une tige 17. L'extrémité du corps 16 est liée à un élément de structure de l'aéronef, alors que l'extrémité de la tige 17 est liée à une partie supérieure du caisson 3.

Le déploiement de l'atterrisseur 1 consiste à commander le vérin 14 pour qu'il se déploie, ce qui a pour effet de faire pivoter le caisson 3 autour de l'axe AP, ainsi que l'ensemble de l'atterrisseur, du fait du décalage existant entre l'axe de relevage 23 et l'axe AP de rotation du caisson qui sont parallèles l'un à l'autre.

Durant ce déploiement, le panneau 7 et la bielle 8, partant d'un état plié se déploient spontanément jusqu'à s'étendre l'un dans le prolongement de l'autre. De même, les bras 9 et 11 se déploient aussi spontanément jusqu'à s'étendre l'un dans le prolongement l'un de l'autre de façon à occuper une position de verrouillage de l'ensemble dans laquelle ils sont maintenus par les ressorts 12, 13.

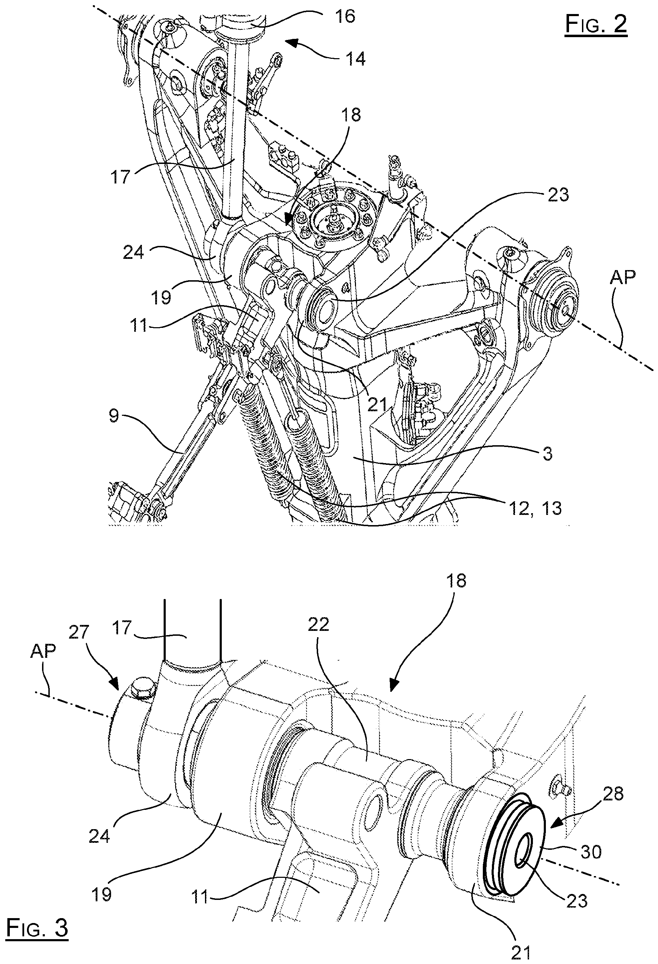

Comme visible plus clairement sur les figures 2 et 3, la portion supérieure du caisson 3 comporte une chappe 18 comprenant une première et une deuxième oreille 19 et 21 portant un axe de relevage 23 orienté transversalement, c'est-à-dire parallèle à l'axe principal AP, tout en étant décalé par rapport cet axe.

L'axe de relevage 23 qui est maintenu par les oreilles 21 et 19 porte dans sa région centrale, c'est-à-dire entre ces oreilles, la tête 22 du bras 11 qu'il traverse, et cet axe de relevage 23 dépasse au delà de la première oreille, pour recevoir une tête de manoeuvre 24 prolongeant la tige 17 du vérin 14 et par laquelle la tige 17 est liée à cet axe par une liaison de type rotule.

Cet axe de relevage 23 est bloqué en translation par une première butée d'extrémité 27 et par une deuxième butée d'extrémité 28. La première butée 27 enserre la première extrémité de l'axe de relevage 23, à savoir celle qui est la plus proche de la première oreille 19, de manière à former un obstacle présentant un diamètre supérieur au diamètre nominal de l'axe. La deuxième butée 28 est formée par un épaulement 30 terminant la deuxième extrémité de l'axe de relevage 23, à savoir celle qui est la plus proche de la deuxième oreille 21, cet épaulement 30 ayant un diamètre supérieur au diamètre nominal de l'axe afin de former un obstacle au déplacement axial de l'axe de relevage 23. La tête de manoeuvre 24 du vérin 14 qui entoure cet axe de relevage 23 est quant à elle située entre la première oreille 19 et la première butée 27.

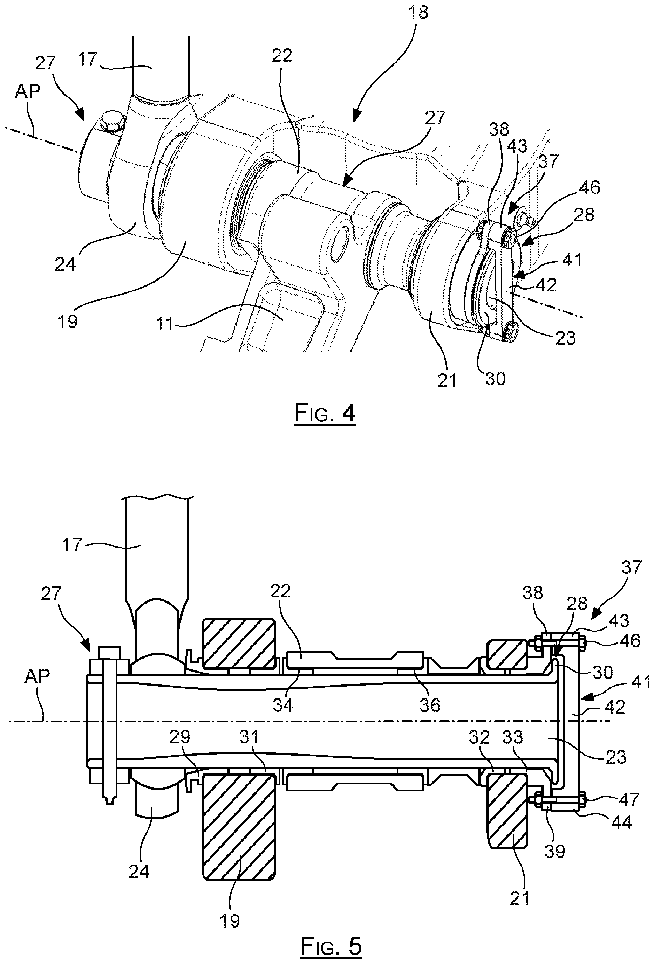

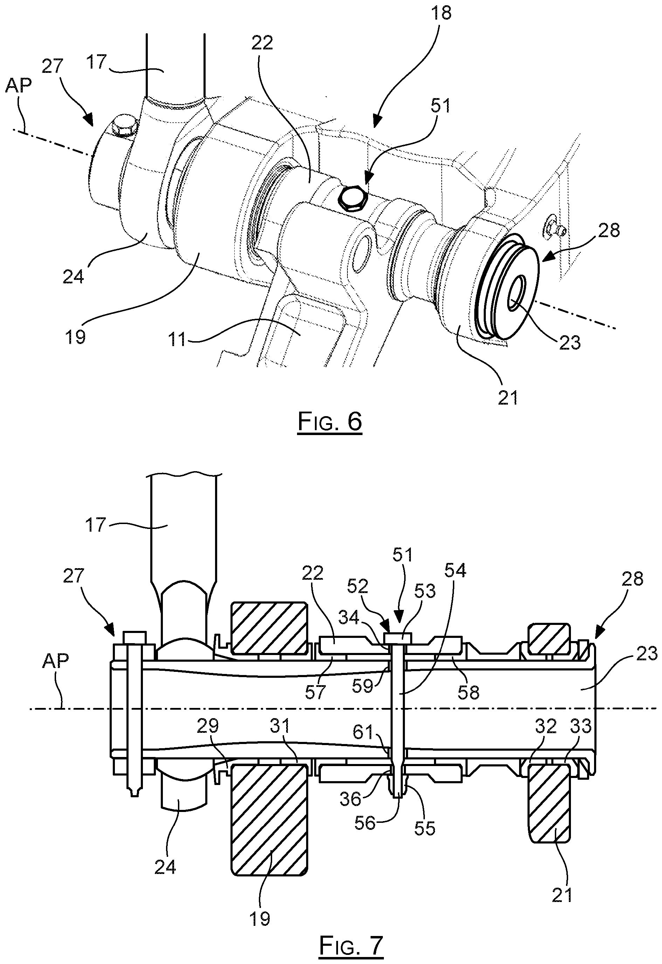

Dans l'exemple d'atterrisseur des figures, et comme visible sur les figures 5 et 7, l'axe de relevage 23 est porté par les oreilles 19 et 21 qu'il traverse, par l'intermédiaire de deux paires de bagues 29, 31, 32, 33. Ces deux paires de bagues forment des paliers qui permettent à cet axe de pivoter sur lui-même, par exemple lorsque l'atterrisseur est manoeuvré d'un état à l'autre.

La tête 22 est portée par l'axe de relevage 23 par l'intermédiaire d'une autre paire de bagues 34, 36 formant palier et permettant, de manière redondante, à la tête 22 de tourner par rapport à l'axe de relevage 23 qui la porte.

En cas de rupture de l'axe de relevage 23 entre sa première extrémité et la première oreille, par exemple sous l'effet des efforts exercés dans cette région par la tête de manoeuvre 24 de son vérin d'actionnement, cet axe de relevage 23 est susceptible de se déplacer pour sortir de la chappe 18, selon un sens de déplacement allant de la première chappe à la deuxième. En pratique, cette migration de l'axe est favorisée par les vibrations de l'ensemble en service, et elle peut conduire l'axe à sortir complètement de son logement.

Plus particulièrement, dans une telle situation, l'axe de relevage 23 n'est plus retenu par la première butée 27, ce qui autorise sa translation vers la deuxième oreille. Dans ce cas, le bras 11 n'est plus maintenu, de sorte que le verrouillage à l'état déployé de l'atterrisseur n'est plus assuré.

Selon l'invention, on prévoit un système de blocage 37 permettant de bloquer sa deuxième extrémité de l'axe de relevage 23 dans les deux directions. Plus particulièrement, la deuxième bague 33 est frettée dans l'alésage de la deuxième oreille 21 qui la reçoit, pour être rigidement solidaire de cette oreille, au lieu de pouvoir pivoter dans l'alésage qui la reçoit. Cette deuxième bague 33 comporte deux pattes radiales 38 et 39 qui s'étendent s'étendant dans des directions opposées et radiales par rapport à l'axe AP, pour dépasser radialement au delà de l'épaulement 30.

Le frettage de la bague 33 peut être assuré au moyen d'un ajustement serré de la bague dans l'alésage, le montage de la bague étant alors assuré au moyen d'une presse. Le montage de la bague frettée peut aussi être assuré en refroidissant cette bague afin de la rétracter avant de l'installer dans l'alésage, pour qu'elle s'y déploie ensuite lors de son réchauffement.

Complémentairement, une barette de blocage 41 s'étend radialement pour être située en vis-à-vis de l'épaulement 30, c'est-à-dire en vis-à-vis de la deuxième extrémité de l'axe 23 afin de former un obstacle au déplacement axial de ce dernier. Cette barette 41 a une longueur totale supérieure au diamètre de l'épaulement 30 et correspondant à la distance séparant les extrémités des pattes 38 et 39. Elle comporte un corps 42 prolongé par des extrémités 43, 44 fixées chacune à l'une des pattes 38 et 39.

Comme visible sur les figures 4 et 5, les extrémités 43 et 44 de la barette 41, qui sont en appui sur les pattes 38 et 39 selon la direction AP, présentent selon la direction AP une épaisseur plus importante que le corps 42 de cette barrette, pour que le corps 42 ne soit pas en appui sur la deuxième extrémité de l'axe de relevage 23, c'est-à-dire l'épaulement 30, en fonctionnement normal de l'atterrisseur.

La fixation de chaque extrémité de la barette 41 à la patte correspondante de la deuxième bague 33 est assurée par deux boulons 46 et 47, s'étendant selon la direction AP, et traversant chacun une extrémité de barette et une patte radiale de la bague 33.

En cas de rupture de l'axe de relevage 23 au niveau de sa première extrémité, la première butée 27 n'est plus opérationnelle, mais un déplacement de l'axe de relevage 23 est alors bloqué par la barette 41 sur laquelle l'épaulement 30 vient alors en appui. Dans ce cas, un déplacement de l'axe de relevage 23 en sens opposé reste quant à lui bloqué par l'épaulement 30 venant en appui sur la deuxième bague 33, c'est-à-dire sur la deuxième oreille.

En variante, on peut prévoir un boulon 51 traversant conjointement la tête 22 et l'axe de relevage 23 de manière à immobiliser cet axe en translation y compris lorsque l'une ou l'autre de ses butées d'extrémité 27, 28 ne peut plus assurer son blocage en translation.

Comme visible sur la figure 6, le boulon 51 s'étend radialement par rapport à l'axe de relevage 23 qu'il traverse. Il comporte une vis 52 ayant une tête 53 en appui sur la face externe de la tête 22 du bras 11, cette tête 53 étant prolongée par une tige 54 dont l'extrémité filetée reçoit un écrou 55.

Plus particulièrement, la tige 54 traverse successivement la paroi de la tête 22, la paroi de l'axe de relevage 23 qui est ici tubulaire, puis à nouveau la paroi de l'axe de relevage 23, et à nouveau la paroi de la tête 22 afin de dépasser du côté opposé de la tête 22 où cette tige 54 comporte une extrémité filetée 56 recevant l'écrou 55 qui est en appui sur la face externe de la tête 22.

Lorsque le boulon 51 est en place et traverse la tête 22 et l'axe de relevage 23, il interdit la rotation de la tête 22 par rapport à l'axe de relevage 23, mais cela ne s'oppose pas au déploiement de l'atterrisseur puisqu'il reste libre de pivoter par rapport aux oreilles 19 et 21.

L'installation du boulon sur un atterrisseur existant consiste en premier lieu à percer la tête 22 du bras 11 de part en part afin de traverser également l'axe de relevage 23 portant cette tête, ce qui en pratique forme deux trous traversants radiaux 57 et 58 à travers cette tête 22 et deux autres trous traversants radiaux 59 et 61 alignés à travers l'axe de relevage 23. La tige 54 de la vis 52 est ensuite engagée à travers ces trous alignés pour recevoir à son extrémité filetée 56 libre l'écrou 55 qui est alors serré de manière appropriée.

## Revendications

1. Atterrisseur (1) d'aéronef comprenant un caisson (3) destiné à être articulé à un élément de structure de l'aéronef pour pivoter entre un état déployé et un état rétracté, cet atterrisseur (1) comprenant :
- un vérin (14) pour rétracter et déployer l'atterrisseur, ce vérin (14) ayant une tête de manoeuvre (22) reliée à une première extrémité d'un axe de relevage (23) porté par deux oreilles (19, 21) d'une chappe (18) du caisson (3), cette première extrémité étant située hors de la chappe (18) ;
- un système de verrouillage comprenant une contrefiche incluant un bras (11) articulé à une partie supérieure du caisson (3) par l'intermédiaire de l'axe de relevage (23), ce bras (11) étant terminé par une tête (22) située entre les oreilles (19, 21) de la chappe (18) et traversée par l'axe de relevage (23) ;
- une première butée d'extrémité (27) portée par l'axe de relevage (23) à sa première extrémité, et une deuxième butée d'extrémité (28) située à la deuxième extrémité de l'axe de relevage (23) ;
- et un système pour bloquer en translation l'axe de relevage (23) en cas de rupture de cet axe de relevage (23) entre sa première extrémité et la chappe (18).

2. Atterrisseur selon la revendication 1, dans lequel la deuxième butée (28) comporte un épaulement (30) formé à la deuxième extrémité de l'axe de relevage (23), et dans lequel le système de blocage comporte un organe de blocage (41) situé axialement en vis-à-vis de l'épaulement (30) et rigidement solidaire de la chappe (18).

3. Atterrisseur selon la revendication 2, dans lequel l'organe de blocage est rigidement solidarisé à la chappe (18) en étant fixé à une bague (33) portée par une oreille (21) et formant palier de l'axe de relevage (23), cette bague (33) étant rigidement solidarisée à l'oreille (21) qui la porte.

4. Atterrisseur selon la revendication 3, dans lequel la bague (33) est rigidement solidarisée à l'alésage de l'oreille (21) par frettage.

5. Atterrisseur selon la revendication 4, dans lequel l'organe de blocage est une barette (41) ayant une longueur supérieure au diamètre de l'épaulement (30).

6. Atterrisseur selon la revendication 5, dans lequel la bague (33) comporte deux pattes (38, 39) dépassant radialement au-delà de l'épaulement (30), et deux boulons (46, 47) traversant chacun une extrémité de la barette (41) et une patte radiale (38, 39).

7. Atterrisseur selon la revendication 1, dans lequel le système de blocage comporte une vis (52) s'étendant radialement et traversant conjointement la tête (22) du bras (11) et l'axe de relevage (23).

8. Atterrisseur selon la revendication 7, dans lequel la vis (52) traverse la tête (22) et l'axe de relevage (23) de part en part, et est maintenue par un écrou (55) vissé à son extrémité.

## Patentansprüche

1. Fahrwerk (1) eines Flugzeugs, umfassend einen Kasten (3), der dazu bestimmt ist, an einem Strukturelement des Flugzeugs angelenkt zu werden, um zwischen einem ausgefahrenen Zustand und einem eingefahrenen Zustand zu schwenken, wobei dieses Fahrwerk (1) umfasst:
- einen Zylinder (14) zum Einziehen und Ausfahren des Fahrwerks, wobei dieser Zylinder (14) einen Manövrierkopf (22) aufweist, der mit einem ersten Ende einer Hebeachse (23), die von zwei Ohren (19, 21) einer Abdeckung (18) des Kastens (3) verbunden ist, wobei sich dieses erste Ende außerhalb der Abdeckung (18) befindet;
- ein Verriegelungssystem, das eine Strebe umfasst, die einen Arm (11) beinhaltet, der durch die Hebeachse (23) an einen oberen Teil des Kastens (3) angelenkt ist, wobei dieser Arm (11) durch einen Kopf (22) abgeschlossen wird, der sich zwischen den Ohren (19, 21) der Abdeckung (18) befindet, und von der Hebeachse (23) durchquert wird;
- einen ersten Endanschlag (27), der von der Hebeachse (23) an ihrem ersten Ende getragen wird, und einen zweiten Endanschlag (28), der sich am zweiten Ende der Hebeachse (23) befindet;
- und ein System, um den Vorschub der Hebeachse (23) im Falle eines Bruches dieser Hebeachse (23) zwischen ihrem ersten Ende und der Abdeckung (18) zu blockieren.

2. Fahrwerk nach Anspruch 1, wobei der zweite Anschlag (28) einen Ansatz (30) beinhaltet, der am zweiten Ende der Hebeachse (23) gebildet ist, und wobei das Blockiersystem ein Blockierorgan (41) beinhaltet, das sich axial gegenüber dem Ansatz (30) befindet und starr fest mit der Abdeckung (18) verbunden ist.

3. Fahrwerk nach Anspruch 2, wobei das Blockierorgan starr fest mit der Abdeckung (18) verbunden ist, indem es an einem Ring (33) fixiert ist, der von einem Ohr (21) getragen wird, und ein Lager der Hebeachse (23) bildet, wobei dieser Ring (33) starr mit dem Ohr (21), das ihn trägt, verbunden ist.

4. Fahrwerk nach Anspruch 3, wobei der Ring (33) durch Schrumpfen starr mit der Bohrung des Ohres (21) verbunden ist.

5. Fahrwerk nach Anspruch 4, wobei das Blockierorgan ein Steg (41) ist, der eine Länge aufweist, die größer als der Durchmesser des Ansatzes (30) ist.

6. Fahrwerk nach Anspruch 5, wobei der Ring (33) zwei Laschen (38, 39) beinhaltet, die radial über den Ansatz (30) überstehen, und zwei Bolzen (46, 47), die jeweils ein Ende des Stegs (41) und eine radiale Lasche (38, 39) durchqueren.

7. Fahrwerk nach Anspruch 1, wobei das Blockiersystem eine Schraube (52) beinhaltet, die sich radial erstreckt, und gemeinsam den Kopf (22) des Armes (11) und die Hebeachse (23) durchquert.

8. Fahrwerk nach Anspruch 7, wobei die Schraube (52) den Kopf (22) und die Hebeachse (23) von einer Seite zur anderen durchquert, und durch eine an seinem Ende angeschraubte Mutter (55) gehalten wird.

## Claims

1. An aircraft landing gear (1) comprising a strut assembly (3) hinged to a structure element of the aircraft to pivot between a deployed state and a retracted state, this landing gear (1) comprising:
- a jack (14) to retract and deploy the landing gear, this jack (14) having an operating head (22) connected to a first end of a lifting pin (23) carried by two lugs (19, 21) of a clevis (18) of the strut assembly (3), this first end being located outside the clevis (18);
- an interlocking system comprising a stay including an arm (11) hinged to an upper part of the strut assembly (3) via the lifting pin (23), this arm (11) being terminated by a head (22) located between the lugs (19, 21) of the clevis (18) and through which the lifting pin (23) passes;
- a first end stop (27) carried by the lifting pin (23) at its first end, and a second end stop (28) located at the second end of the lifting pin (23);
- and a system for translationally locking the lifting pin (23) in the event of this lifting pin (23) breaking between its first end and the clevis (18).

2. The landing gear according to claim 1, wherein the second stop (28) includes a shoulder (30) formed at the second end of the lifting pin (23), and wherein the locking system includes a locking member (41) located axially facing the shoulder (30) and rigidly integral with the clevis (18).

3. The landing gear according to claim 2, wherein the locking member is rigidly attached to the clevis (18) by being fixed to a ring (33) carried by a lug (21) and forming a bearing of the lifting pin (23), this ring (33) being rigidly attached to the lug (21) which carries it.

4. The landing gear according to claim 3, wherein the ring (33) is rigidly attached to the bore of the lug (21) by shrink fit.

5. The landing gear according to claim 4, wherein the locking member is a bar (41) having a length greater than the diameter of the shoulder (30).

6. The landing gear according to claim 5, wherein the ring (33) includes two tabs (38, 39) protruding radially beyond the shoulder (30), and two bolts (46, 47) each passing through one end of the bar (41) and one radial tab (38, 39).

7. The landing gear according to claim 1, wherein the locking system includes a radially extending screw (52) passing jointly through the head (22) of the arm (11) and the lifting pin (23).

8. The landing gear according to claim 7, wherein the screw (52) passes right through the head (22) and the lifting pin (23) and is held by a nut (55) screwed on its end.
